# EUROPEAN PATENT SPECIFICATION

(11) **EP 0 717 917 B1**
(45) Date of publication and mention of the grant of the patent: **19.05.2004**
(21) Application number: 94922655.9
(22) Date of filing: 26.07.1994
(51) Int. Cl.: H05B 6/80, A23L 3/00

(54) **SUBATMOSPHERIC PRESSURE COOKING METHOD**
VERFAHREN ZUM KOCHEN BEI UNTERDRUCK
PROCEDE DE CUISSON SOUS PRESSION SUBATMOSPHERIQUE

(30) Priority: 30.07.1993 US 99418; 01.06.1994 US 252651
(43) Date of publication of application: 26.06.1996
(73) Proprietor: Tippmann, Eugene R., Lexington, SC 29072 (US)
(72) Inventor: Tippmann, Eugene R., Lexington, SC 29072 (US)
(74) Representative: Degwert, Hartmut, Dipl.-Phys.
(86) International application number: PCT/US1994/008209
(87) International publication number: WO 1995/004445

(56) References cited:
- EP-A- 0 379 283
- EP-A- 0 586 035
- WO-A-92/02150
- GB-A- 2 132 745
- US-A- 3 718 082
- US-A- 3 769 902
- US-A- 4 416 908
- US-A- 4 554 440
- US-A- 5 168 797
- US-A- 5 235 903
- PATENT ABSTRACTS OF JAPAN vol. 17, no. 206 (M-1400), 22 April 1993 & JP-A-04 347418 (MATSUSHITA ELECTRIC INDUSTRIAL), 2 December 1992,
- PATENT ABSTRACTS OF JAPAN vol. 16, no. 226 (M-1254), 26 May 1992 & JP-A-04 043225 (MATSUSHITA ELECTRIC INDUSTRIAL), 13 February 1992,

## Description

### BACKGROUND OF THE INVENTION

The present invention relates generally to cooking ovens and more particularly to such an oven which cooks utilizing a variety of heating mediums. Preferably, the cooking is carried out at a reduced pressure and the oven is adapted to hold the cooked product at a preferred temperature in a reduced atmosphere during the cooking.

There are a wide variety of known cooking techniques and there has been, within each, a great deal of experimentation with the several variables associated with such cooking techniques. For example, the use of steam as a heat transfer medium is well known. Such steam cooking devices may employ the steam at atmospheric pressure as in U.S. Patent No. 4,011,805 with convection heat transfer. Steam as the heat transfer medium at substantially atmospheric pressure with forced convection heat transfer is also known from U.S. Patent No. 4,173,215. In this last patented arrangement, water is introduced into the bottom of a steam chamber and a heat source outside that chamber heats that water to produce steam. The chamber is vented so as to maintain the pressure within the cooking vessel at substantially atmospheric pressure. Such steam cooking devices may employ the steam at an elevated pressure as in the common "pressure cooker". U.S. Patent No. 3,800,778 discloses a steam cooker with a valve and pump arrangement so that the pressure within the cooking vessel can be maintained either above or below atmospheric pressure.

JP-A-4 347 418 discloses a method of preparing foods by microwave heating in a cooking chamber comprising a pressure reducing device.

The stated reason for cooking below atmospheric pressure is to cook at a reduced temperature so that delicate foods will not be overcooked and their vitamins lost. U.S. Patent No. 3,223,021 employs this same general concept in a coffee roasting oven which operates below atmospheric pressure for a period of time and then has its internal pressure increased. The coffee in this roasting oven is cooled after roasting and before the pressure is released. Finally, the concept of a food holding cabinet is old and disclosed, for example, in U.S. Patent No. 4,623,780. This patent points out that it is difficult to maintain precooked food at a preferred serving temperature while maintaining its moisture content. The patent suggests food storage at a temperature below its cooking temperature and in a steam atmosphere to maintain crust crispness, for example, with fried chicken, while minimizing moisture loss.

There has been a significant amount of research into eating habits as they relate to health. For example, in the article PREVENTION OF FORMATION OF IMPORTANT MUTAGENS/CARCINOGENS IN THE HUMAN FOOD CHAIN by Weisburger and Jones, it is pointed out that during cooking (typically frying or broiling) leading to the browning of meat or fish, mutagens or carcinogens are frequently generated. The article suggests the desirability of finding ways to lower or prevent the formation of these undesirable products during cooking. One scheme for lowering these undesirable products is to reduce the surface temperature during cooking. Another is by additives to the meat or fish prior to cooking.

From the above article, it appears that the undesirable mutagens or carcinogens are generated on the food surface during cooking, for example, of a hamburger on a conventional hot grill and that these undesirable products will be scraped off the grill with the meat and placed in the consumer's sandwich.

The current method of cooking a hamburger, for example, requires a lot of fat for three reasons. The fat acts as a release agent preventing the meat from sticking to the griddle. It also acts as a heat transfer medium. Finally the fat provides the "juiciness" in the finished sandwich. The undesirability of the conventional "fast food" approach to cooking beef for sandwiches on a hot grill should now be apparent.

Lower cooking temperatures not only reduce or eliminate the formation of the above noted mutagens or carcinogens, but also provides a more palatable product. Exposing meat to high temperatures causes the fibers in the meat to shrink purging the meat of its natural juices. Such high temperature cooking also cooks the outer surface to its "done" state prior to the interior reaching that "done" condition. Thus, the outer portions are frequently comparatively over-cooked, dry and tough. Reduced cooking temperatures ensure that the food product will not be over-cooked regardless of the time the food product is subjected to that reduced temperature and that the center as well as the surface will be cooked to perfection.

It is a well known phenomenon that it seems to take forever to hard boil an egg at high elevations, say, for example, high in the mountains, where the air pressure is significantly lower than it is at sea level. The reason is that the water in which the egg is immersed boils at a much lower temperature under the reduced pressure conditions and the egg never gets as hot as it will under similar circumstances at sea level. The present invention capitalizes on this phenomenon by reducing the pressure within the cooking vessel during cooking. Researchers have identified at least four compounds in cooked meats that are known carcinogens that are formed during conventional cooking. These compounds, known as heterocyclic aromatic amines, or HAAs, are formed by the heating of animal protein. These compounds are formed as a normal part of the cooking process, whether the meat is beef, pork, chicken, or fish. This invention provides a method to solve this problem. It will eliminate the carcinogens that are formed during cooking and reduce fat by as much as 66% in such products as hamburgers. This invention provides a new method of cooking which improves the taste and nutritional value of meat and vegetables.

### SUMMARY OF THE INVENTION

It is a primary object of the present invention to overcome the shortcomings of the prior art discussed hereinabove.

A further and significant object of the present invention is to provide a method for cooking a food product, particularly a meat product while eliminating cancer causing compounds which are formed using presently known cooking methods and devices.

It is yet a further object of the present invention to improve the tenderness and flavor of the food product by retaining more of the natural juices within the food product.

Among the several objects of the present invention may be noted the provision of a cooking technique which provides a moist food product, such as meat, without the fat normally present in such moist food products; the provision of an oven capable of cooking the product at a preferred temperature without dehydrating that cooked product; and the reduction or avoidance of the carcinogens and mutagens frequently associated with the cooking of meat on a grill. These as well as other objects and advantageous features of the present invention will become apparent from the following detailed description.

In accordance with the present invention, a method of preparing a food product comprises the steps of claim 1.

These as well as additional objects and advantages of the present invention will become apparent from the following detailed description when read in light of the several figures.

### BRIEF DESCRIPTION OF THE DRAWINGS

Figure 13 is an elevational view of a cooking device for reduced pressure microwave cooking in accordance with an alternative and preferred embodiment of the present invention;
Figure 14 is a cross-sectional view of the cooking device illustrated in Figure 13;
Figure 15 is a cross-sectional view of a modified cooking device illustrated in Figure 13; and
Figure 17 is a cross-sectional view of a baking oven for cooking food products at a reduced pressure in accordance with an alternative embodiment of the present invention.
Figure 18 is a cross-sectional view of a baking oven including a rotisserie for cooking food products at a reduced pressure in accordance with an alternative embodiment of the present invention.

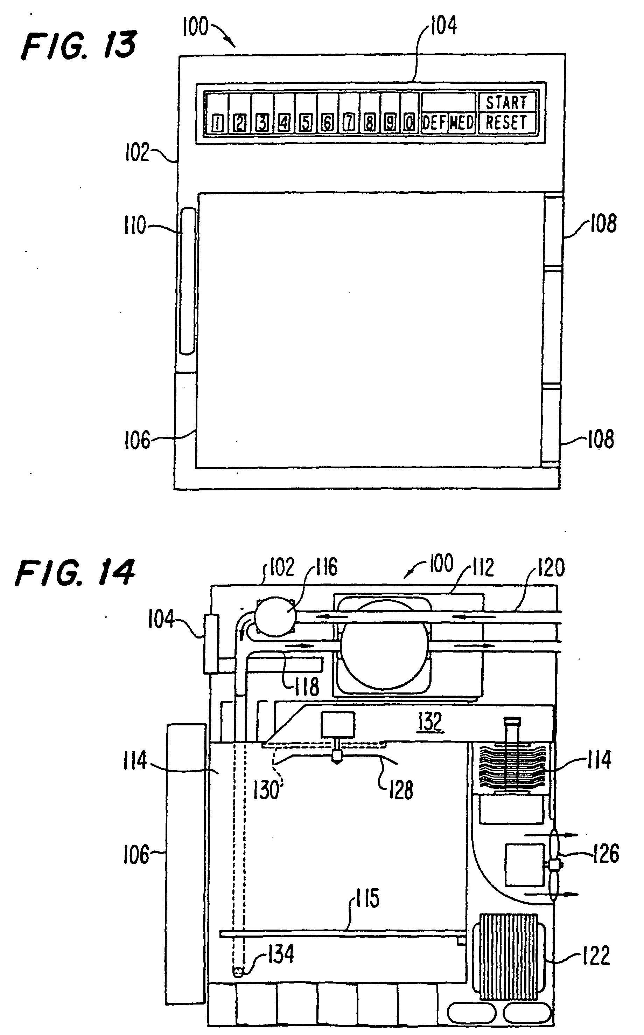

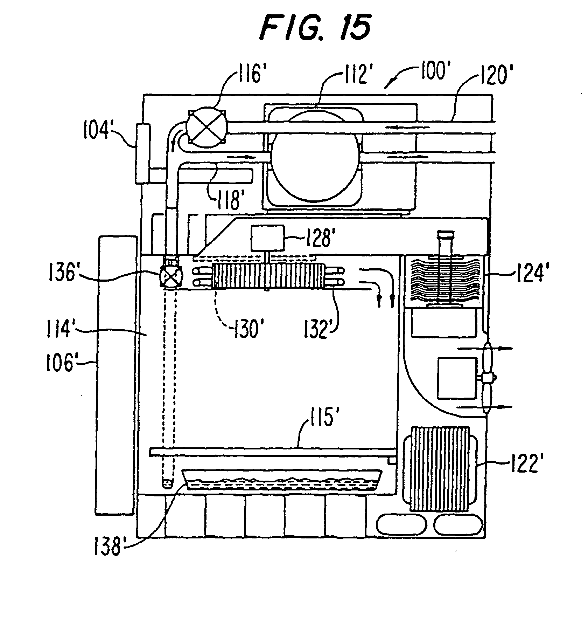

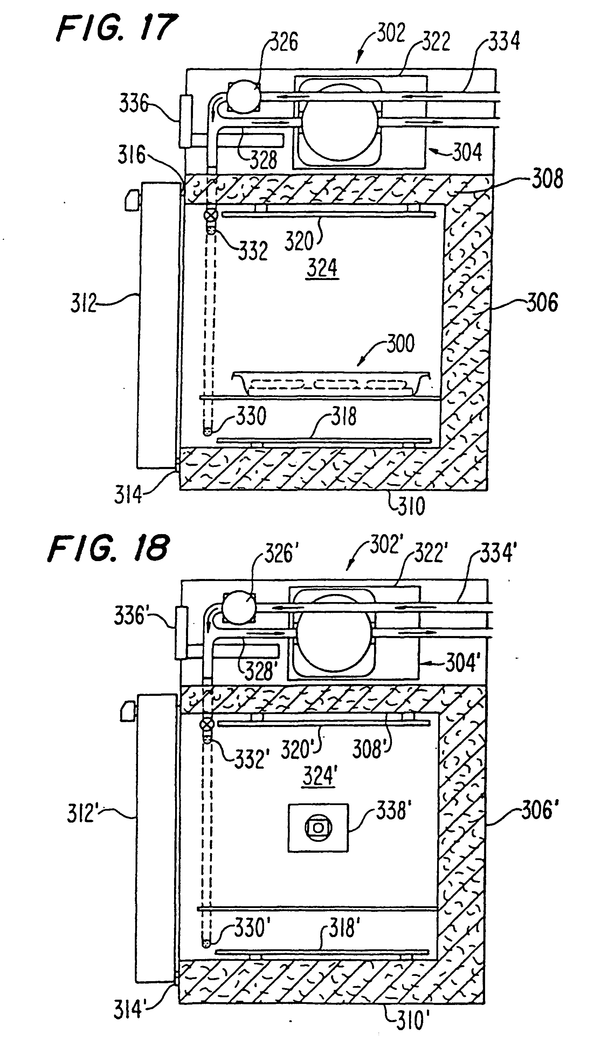

Corresponding reference characters indicate corresponding parts throughout the several figures.

The exemplifications set out herein illustrate a preferred embodiment of the invention in one form thereof and such exemplifications are not to be construed as limiting the scope of the disclosure or the scope of the invention in any manner.

### DESCRIPTION OF THE PREFERRED EMBODIMENT

Referring now to Figures 13-15, a preferable embodiment of the present invention will be discussed in greater detail. As discussed herein, a reduction in the internal pressure within a cooking device has a dramatic effect on how the food cooks within the device. This is particularly true when cooking meat products.

The cooking device illustrated in Figure 13 is an industrial type microwave oven 100 or any type oven which cooks with electrical wave form energy such as microwaves, radio waves and the like, which includes a housing 102 accommodating a control panel 104 and having a door 106 hingedly connected thereto by hinges 108. A handle 110 is provided for opening and closing the microwave oven and for permitting access to the contents of the microwave oven by the consumer. Unlike a conventional microwave oven, the oven illustrated in Figures 13 and 14 includes a vacuum pump 112 for evacuating the cavity or cooking chamber 114 within an interior of the microwave oven. Also provided is a solenoid valve 116 which permits a vacuum to be drawn within the cavity 114 and selectively subjecting the cavity 114 to atmospheric pressure through the solenoid valve 116. As is readily apparent from Figure 14, the vacuum pump 112 includes a vacuum line 118 which extends to a lower region of the cavity 114. The significance of the vacuum line extending to the lower region of the cavity 114 will be explained in detail hereinbelow. Also connected to the solenoid valve 116 is an atmospheric pressure passage 120.

As with conventional microwave ovens, the microwave oven 100 includes a transformer 122 and megnatron tube 124. A cooling fan 126 is also provided for cooling the megnatron tube 124 as with conventional microwave ovens. Therein, microwaves generated by the megnatron tube 124 are dispersed throughout the cavity 114 of the microwave oven by the microwave mixer 128. A glass barrier 130 is also provided which permits the microwaves to pass therethrough while protecting the megnatron tube 124 from any moisture or steam which may be generated within the cavity 114 of the microwave oven.

Figure 15 illustrates an alternative embodiment of the microwave oven set forth in Figure 14. Therein, the microwave oven 100' includes the door 106' which closes the cavity 114' of the microwave oven. As with the previous embodiment, a vacuum pump 112' is provided for evacuating the cavity 114' of the microwave oven. Likewise, a solenoid valve 116' is provided for selectively exposing the cavity 114' to atmospheric pressure by way of the passage 120'. During the evacuation of the cavity 114', a vacuum is drawn by the vacuum pump 112' through the vacuum passage 118' as with the previous embodiment. Unlike the previous embodiment; however, the evacuation of the cavity 114' is conducted through a top portion thereof rather than a bottom portion as with the previous embodiment. The significance of which will be explained in greater detail hereinbelow.

Further, as with the previous embodiment as well as conventional microwave ovens, a transformer 122' is provide along with a megnatron tube 124' for generating the microwave energy for heating the contents of the cavity 114'. Also as with the previous embodiment, a microwave mixer 128' is provided for dispersing the microwaves throughout the cavity 114' with the glass barrier 130' being provided to protect the megnatron tube 124'. Unlike the previous embodiment, a resistance heater 132' is provided in an upper portion of the cavity 114' for preheating the walls of the cavity 114'. That is, the cooking compartment is preheated to approximately 121°C (250° Fahrenheit) using the resistance heater 132'.

Like the previous embodiment, reducing the internal pressure of the oven lowers the boiling point of the moisture in the food product being cooked. When the microwaves pass through the food product, the energy is transformed into heat, the heat is generated in small areas within the food product and subsequently dissipated throughout the food product. As discussed hereinabove, the problem with using microwave ovens to heat and cook a food product is that the heat generated within the food product is too hot and overcooks the product in very small areas, such that the meat becomes tough in those areas. It can be noted that as long as there is moisture in the food product, the maximum temperature of the food product can get to is the boiling temperature of the moisture in the food product which is 100° C (212° Fahrenheit). Reducing the pressure within the cavity 114 or 114' thus reduces the boiling temperature of the moisture in the meat and eliminates the overcooking which causes the meat to become tough. The ideal temperature for cooking beef is approximately 68°C (155° Fahrenheit)while the ideal temperature for chicken and pork is approximately 77°C (170° Fahrenheit). Consequently it is desirable to maintain the cooking temperature within the cavity 114 or 114' in the range of 65.5° to 82°C (150 to 180° Fahrenheit). This can be accomplished by controlling the pressure within the oven.

Reducing the internal pressure by way of the vacuum pump 112 or 112' in the preceding embodiments also removes the air from the cavities 114 and 114' thus the cavities become filled with saturated steam. Saturated steam is steam that is at its condensing temperature. When the cavity 114' is filled with saturated steam, all internal surface temperatures are equal to or above the condensing temperature of the saturated steam. In order for there to be a surface temperature lower than the condensing temperature of the steam, there would have to be a pressure difference within the cavity 114'. Because all surface temperatures are the same or greater, the possibility of one piece of meat within the cavity being done before another is eliminated because the moisture on the warmer piece of meat would boil and absorb heat and then transfer such heat in the form of steam and condense on a cooler piece of food within the cavity 114' and subsequently dissipating such heat to the cooler piece.

Referring again to Figure 14, during the cooking cycle, the vacuum pump 112 is turned on and the solenoid valve 116 is closed. With a food product, such as a hamburger or other product containing moisture placed in the cavity 114, the megnatron tube 124 is activated so as to generate microwave energy which travels through the tunnel 132 and is reflected down into the cavity 114. The food product may be placed on a rack 115 or on a separate support within the cavity 114. A microwave energy passes through the glass barrier 130 and is mixed throughout the cavity 114 by the microwave mixer 128. The microwaves are permitted to bounce around within the cavity 114 until they are absorbed by the food being cooked and subsequently changed into heat. Removing air and steam from the bottom of the cavity 114 by way of the port 134 causes the cooking compartment to be filled with low pressure air. When the microwaves heat the food to the point where the moisture in the product boils, the steam rolls off the product and is evacuated from the bottom of the cooking compartment 114 by the vacuum pump 112. Because the heat transfer medium is the food product itself, an abundance of steam is undesirable. Consequently, because steam is heavier than the air within the cooking compartment, the steam is easily removed from the lower part of the compartment. Thus by withdrawing steam from the bottom of the cavity 114, any condensation on the walls of the cavity 114 or the food product can be avoided. Accordingly, by reducing the pressure within the cavity 114, the temperature at which the food item and particularly meat is cooked within the cavity 114 is reduced to a point where the product is cooked without achieving a temperature which creates carcinogens.

With respect to Figure 15, when cooking a product within this unit, the walls of the cavity 114' are preheated to approximately 121°C (250° Fahrenheit) using the resistant heater 132'. Moreover, the air and steam are removed from the top of the unit. When the microwaves raise the temperature of the food product enough to cause the moisture in the product to boil, the steam will leave the product and fill the cavity 114'. Because the surface temperature of the cavity 114' is above the condensing temperature of the steam, no steam will condense on the surface of the cavity 114'. This unit is particularly suitable for commercial applications in that continuous use of the device will not cause moisture to build up on the walls of the cavity 114'. Moreover, because the walls of the cavity 114' are preheated, the only surfaces which are cool enough to condense the steam which is generated from the product is the cooler surfaces of the food product itself and consequently such device is very effective in cooking a variety of food products and particularly leafy vegetable products.

Accordingly, as can be appreciated from the forgoing discussion with respect to the device illustrated in Figures 13-15, the microwave energy generated by the megnatron tube 124, 124' heats the product itself. Consequently with these embodiments it is the temperature of the food product itself which is controlled and not the temperature of a separate heat transfer medium such as steam. This is the case because it is the food product itself which is the heat transfer medium in the embodiments illustrated in Figures 13-15 as well as that illustrated in Figure 16.

While the foregoing embodiments are described in the context of two separate units, an oven may incorporate all the features from both the device illustrated in Figure 14 as well as that of Figure 15 as is illustrated by the hidden lines of Figure 15. Therein, a valve 136' is provided to selectively change the point of removal of the air and steam from the cavity 114' thus the air and steam may be removed from either the bottom or top of the unit and the resistant heater 132' may be selectively operated to heat the walls of cavity 114' only when steam and air are removed from the top of the cavity 114'. In the illustrated embodiment, the valve 136' is preferably a solenoid valve; however any suitable valve may be used. Further, each of the devices illustrated in Figures 14 and 15 may be operated in a manner substantially similar to that of existing microwave ovens. That is, the food product may be heated by using time to control the temperature or by using a temperature probe within the food product itself.

Further, in addition to the foregoing, a small amount of water may be provided in a tray 138' at the bottom of the cavity 114 or 114' below the rack 115 or 115' respectively. Thus, more heat can be applied to the product being cooked in that a portion of the microwave energy is dissipated into the product itself while the balance is dissipated into the water which boils and changes into steam with this steam then condensing on the surface of the food product thus adding heat to the food product being cooked. Consequently, the product cooks not only from the microwave energy being dissipated therein but also from the added steam and yet no part of the product can get over the boiling temperature of the moisture in the compartment. In doing so, frozen foods may be thawed or cooked using either of the foregoing devices. Further, rather than placing water within the tray 138', a susceptor material which absorbs microwave energy and becomes hot may be placed in the tray 138'. Thus, when the natural juices of the meat drip down to the susceptor, the high surface temperature of the susceptor will boil the natural juices of the product which subsequently condense on a surface of the food product and adds heat to such product much like using water. However, food products steamed using their natural juices retain more of their natural flavors than food products which are cooked with steam and microwave energy alone.

Figure 17 illustrates yet another embodiment of the present invention wherein the food product 300 to be cooked is placed in a baking oven 302 of the radiant or convection type wherein such baking oven 302 includes a system 304 for reducing the internal pressure of the baking oven 302. The baking oven is of the conventional type including insulated side walls 306, an insulated top wall 308, an insulated bottom wall 310 as well as an insulated door 312 which is hingedly connected to the bottom wall 310 by way of hinge 314. The door 312 when closed seals about its perimeter by seal 316. The baking oven may be of either the electric type including electric heating elements 318 and 320 as shown in Figure 17 or may be heated by way of gas (not shown) or other known source of producing heat energy.

As is noted hereinabove, the baking oven 302 includes the system 304 for reducing the internal pressure of the baking oven 302. This system being similar to that illustrated in Figures 14 and 15. The vacuum system includes vacuum pump 322 for evacuating the cooking cavity 324 of the baking oven 302. Also provided is a solenoid valve 326 which when closed permits a vacuum to be drawn within the cavity 324 and when opened selectively subjects the cavity 324 to atmospheric pressure through the solenoid valve 326. As may be readily apparent from Figure 17, the vacuum pump 322 includes a vacuum line 328 which extends to a lower region of the cavity 324 and includes inlets 330 and 332. The particular positioning of the inlets 330 and 332 are shown as being in an upper and lower portion of the cavity 324, however a multiple number of outlets or a single outlet may be used with the position of such outlet being determined in accordance with the food product to be cooked within the baking oven 302. Additionally, each of the inlets may include a separate valve for controlling the flow of air through such inlet. The significance of the positioning of the inlets is similar to that set forth hereinabove and shall be explained in greater detail hereinbelow. Additionally, as with the vacuum system illustrated in Figure 14, the vacuum system 304 includes an atmospheric air passage 334 connected to the solenoid valve 326 for selectively subjecting the cavity 322 to atmospheric pressure. The oven itself as well as the vacuum system may be readily controlled by a control panel 336 which is positioned in an easily accessible portion of the front of the baking oven 302.

Figure 18 illustrates an alternative embodiment of the baking oven set forth in Figure 17. The baking oven includes all of the components of the baking oven 302 with the addition of a rotisserie 338 provided within the cavity 324. The baking oven 302' includes insulated back wall 306' as well as insulated top and bottom walls 308' and 310' respectively. Similarly, an insulated door 312' is provided and hingedly connected to the bottom wall 310' by way of hinge 314'.

The oven 302' likewise includes a vacuum system 304' which includes vacuum pump 322' and vacuum passage 328' for producing a reduced pressure within the cavity 324'. Additionally, the vacuum system 304' includes solenoid valve 326' for selectively subjecting the cavity 324' of the baking oven 302' to atmospheric pressure by way of a passage 334'. As with the previous embodiment, electric heating elements 318' and 320' are provided for heating the cavity 324' of the baking oven 302', however any alternative source of heat energy may be used as discussed hereinabove. Additionally, control panel 336' is provided for controlling the temperature of the cavity 324' as well as the vacuum system 304'.

When a turkey is cooked in a standard oven, portions of the turkey are overcooked while waiting for the remaining portions of the turkey to get up to the necessary temperature. For example, in a conventional baking oven, the breast meat of a turkey will get to 90.5°C (195° F)before the thigh meat gets to the requisite 74°C (165°) temperature. Breast meat is ideally done at 74°C (165° F), thus, by cooking the breast meat to 90.5°C (195° F), the breast meat will dry out and toughen. Consequently, by cooking a turkey in the oven illustrated in Figures 17 and 18 with a reduced internal pressure, the breast meat will not get above 74°C (165° F)in that the water in the breast will boil and absorb the heat rather than permitting the temperature of the meat to rise. The reduced internal pressure is thus regulated so as to cause the water within the turkey to boil at 74°C (165° F). The reduced internal pressure can be regulated to cause the water to boil at any predetermined temperature. However, as discussed hereinaboye the ideal temperature for chicken and turkey products is between 74° and 77°C (165° and 170° F). When the temperature of the meat is raised above 77°C (170° F), the fiber in the meat shrinks and causes the juices to be purged out. Far less juice is lost from the meat when boiling and holding the temperature at the reduced level as compared to permitting the temperature to rise.

As discussed hereinabove, the inlets for the vacuum system may be positioned in any position within the cooking cavity 324 however because the water within the meat boils generating steam, which would rise within the oven cavity, it may be desirable to position the inlet in the upper portion of the cavity 324 to draw off this steam which is generated during the cooking of the meat product. However, as discussed hereinabove because the meat product itself is the coldest surface within the oven, by drawing the vacuum from a lower portion of the cavity the steam would be drawn back into contact with the meat product with some of the steam condensing on the product thus providing additional heat transfer medium for heating the food product. The particular positioning of the vacuum system inlet would thus be chosen depending upon the character of the product being cooked.

Similar to the foregoing example, when cooking a pot roast in a standard oven the gravy and other juices boil at 100°C (212° F) which for cooking meat and vegetables is too hot thus resulting in the overcooking of the meat and vegetables. Accordingly, by reducing the internal pressure of the cooking cavity 324 of the baking oven 302 to achieve a boiling point of 79.5°C (175° F), the meat and vegetables would not be overcooked and the meat would remain tender. Again, the particular boiling point of the gravy and juices can be controlled by controlling the internal pressure of the cooking cavity 324.

While the foregoing examples are directed to meat products, the oven including a vacuum system is also highly beneficial when cooking fruits and products containing fruits. For example, when baking an apple pie in a conventional oven, the juices boil at 100°C (212° F)which rapidly cooks the apples. As discussed hereinabove, most fruits like most meats and vegetables are overcooked at 100°C (212° F), thus, reducing the internal pressure of the cavity of the baking oven would permit a cook to select the internal temperature of pies, casseroles, pot roasts and many other dishes so as to retain much of the natural juices of the product while eliminating the creation of harmful carcinogens.

From the foregoing, it is now apparent that a novel cooking technique as well as novel food preparation ovens have been disclosed meeting the objects and advantageous features set out hereinbefore as well as others, and that numerous modifications as to the precise shapes, configurations.

## Claims

1. A method of preparing a food product comprising the steps of:
- placing the food product within a cooking cavity (114; 324) of an oven (100; 302), the oven (100; 302) having an evacuation means (112, 322) for reducing the internal pressure within said cooking cavity (114; 324), said evacuation means (112, 322) comprising an evacuation passage (118; 328, 330, 332) communicating said evacuation means with a lower region and an upper region of said cooking cavity (114; 324), and a valve means (116 , 136' ; 326) for cavity (114; 324) from one of said lower region and said upper region of said cooking cavity (114; 324);
- reducing a pressure within said cooking cavity (114; 324) thereby creating a vacuum in said cooking cavity (114; 324);
- heating the food product within the cooking cavity (114; 324) with microwave energy, or by raising an internal temperature of said cooking cavity (114; 324) using electric heating elements (318, 320) or gas;
- and returning the cooking cavity (114; 324) to atmospheric pressure,
wherein the pressure within the cooking cavity (114; 324) is selected so that moisture within the food product boils at a temperature in a range of 65.5° to 82°C (150°F to 180°F), and wherein the step of reducing the pressure within the cooking cavity (114; 324) includes the step of selectively drawing a vacuum from one of a lower region or an upper region of said cooking cavity(114; 324).

## Patentansprüche

1. Verfahren zur Zubereitung eines Nahrungsmittelprodukts, mit den folgenden Schritten:
- das Nahrungsmittelprodukt wird in einen Garraum (114; 324) eines Herdes (100; 302) eingebracht, wobei der Herd (100; 302) eine Evakuierungseinrichtung (112; 322) zur Verringerung des Innendrucks innerhalb des Garraums (114; 324) aufweist, wobei die Evakuierungseinrichtung (112; 322) einen Evakuierungsdurchgang (118; 328, 330, 332), der die Evakuierungseinrichtung mit einem unteren Bereich und einem oberen Bereich des Garraums (114; 324) verbindet, sowie eine Ventileinrichtung (116, 136'; 326) zur gezielten Evakuierung des Garraums (114; 324) aus dem unteren Bereich oder dem oberen Bereich des Garraums (114; 324) umfaßt;
- ein Druck innerhalb des Garraums (114; 324) wird verringert, wodurch in dem Garraum (114; 324) ein Vakuum geschaffen wird;
- das Nahrungsmittelprodukt wird innerhalb des Garraums (114; 324) mit Mikrowellenenergie oder durch Erhöhung einer Innentemperatur des Garraums (114; 324) unter Verwendung elektrischer Heizelemente (318, 320) oder Gas erhitzt;
- und der Garraum (114; 324) wird wieder auf Atmosphärendruck gebracht,
bei dem der Druck innerhalb des Garraums (114; 324) so gewählt wird, daß Feuchtigkeit in dem Nahrungsmittelprodukt bei einer Temperatur in einem Bereich von 65,5° bis 82°C (150°F bis 180°F) kocht, und bei dem der Schritt, bei dem der Druck innerhalb des Garraums (114; 324) verringert wird, den Schritt enthält, bei dem von einem oberen Bereich oder einem unteren Bereich des Garraums (114; 324) gezielt ein Vakuum gezogen wird.

## Revendications

1. Procédé de préparation d'un produit alimentaire qui comprend les étapes suivantes :
- le produit alimentaire est placé à l'intérieur d'une cavité de cuisson (114 ; 324) d'un four (100 ; 302), le four (100 ; 302) comportant un moyen d'évacuation (112 ; 322) pour réduire la pression interne à l'intérieur de la cavité de cuisson (114; 324), le moyen d'évacuation (112; 322) comprenant un passage d'évacuation (118 ; 328 ; 330 ; 332) qui relie le moyen d'évacuation à une partie inférieure et à une partie supérieure de la cavité de cuisson (114 ; 324), et un moyen de valve (116 ; 136' ; 326) pour évacuer sélectivement la cavité de cuisson (114 ; 324) de la partie inférieure ou de la partie supérieure de la cavité (114 ; 324) de cuisson ;
- une pression à l'intérieur de la cavité de cuisson (114 ; 324) est réduite, ce qui produit un vide dans la cavité de cuisson (114 ; 324) ;
- le produit alimentaire est fait chauffer à l'intérieur de la cavité de cuisson (114; 324) à l'aide d'énergie micro-ondes ou en augmentant une température interne de la cavité de cuisson (114 ; 324), en utilisant des éléments électriques de chauffage (318 ; 320) ou du gaz ;
- et la cavité de cuisson (114; 324) est ramenée à une pression atmosphérique,
dans lequel la pression à l'intérieur de la cavité de cuisson (114 ; 324) est choisie de manière à ce que de l'humidité à l'intérieur du produit alimentaire bouille à une température dans la plage de 65,5° à 82°C (150°F à 180°F) et dans lequel l'étape, lors de laquelle la pression à l'intérieur de la cavité de cuisson (114 ; 324) est réduite, inclue l'étape, lors de laquelle un vide est sélectivement retiré de la partie inférieure ou de la partie supérieure de la cavité de cuisson (114 ; 324) .
